# EUROPEAN PATENT SPECIFICATION

(11) **EP 0 457 400 B1**
(45) Date of publication and mention of the grant of the patent: **10.08.1994**
(21) Application number: 91201118.6
(22) Date of filing: 10.05.1991
(51) Int. Cl.: B23K 11/20

(54) **Welding unit for metal pipes inserted one inside the other**
Schweissverbindugn für Metallrohre, von denen eins in das andere gesteckt ist
Ensemble sondé pour tuyaux métalliques insérés l'un dans l'autre

(30) Priority: 17.05.1990 IT 2034690
(43) Date of publication of application: 21.11.1991
(73) Proprietor: Bogni, Benito, I-21020 Ternate (Varese) (IT)
(72) Inventor: Bogni, Benito, I-21020 Ternate (Varese) (IT)
(74) Representative: Mittler, Enrico

(56) References cited:
- DE-C- 938 206
- DE-C- 1 031 448
- PATENT ABSTRACTS OF JAPAN vol. 11, no. 155 (M-589)(2602) 20 May 1987,& JP-A-61 286076 (HITACHI LTD) 16 December 1986,

## Description

The present invention relates to a welding unit for metal pipes inserted one inside the other, according to the preamble of claim 1.

The need is known of accomplishing on occasion the connection by welding of metal pipes, possibly even of different materials.

This, for instance, is the case of pipes connecting the evaporator and the compressor of an ordinary refrigerator, where an aluminium pipe leaves the former and is inserted into a copper pipe leading into the compressor.

For welding the two pipes it is normal to use electric resistance welding units, which basically comprise two pairs of clamps suitable for grasping and holding the respective pipes in an inserted and clamped position during the time in which an electric current is supplied to the welding area. The heat generated by the electric current passing through the pipe materials determines the reciprocal welding of the two materials and thus of the two pipes.

In the units according to the known art the structure of the clamps is such that the heat given off is not capable of producing a weld that is uniform along the entire connecting area between the copper pipe and that of aluminium.

The object of the present invention is to accomplish a weld that is as homogeneous as possible along the entire contact area between the pipes.

According to the invention such object is attained by means of a welding unit for a first and a second metal pipe inserted one inside the other, comprising a first and a second pair of electrically supplied clamps for supporting and clamping, respectively, said first and second pipe to be welded, characterized in that said clamps of the second pair comprise respective ceramic inserts contact with said second pipe in the area of insertion and welding of the first pipe.

In this way the heat generated by the electric current is concentrated in a uniform manner in the welding area between the two pipes, inside the insulating ceramic inserts, allowing a uniform weld to be obtained along the entire length of the area itself.

The features of the present invention shall be made more evident by an embodiment illustrated as a non-limiting example in the enclosed drawings, wherein:
Fig. 1 is a partially sectioned front view of the welding unit with the two pairs of clamps in the at rest position;

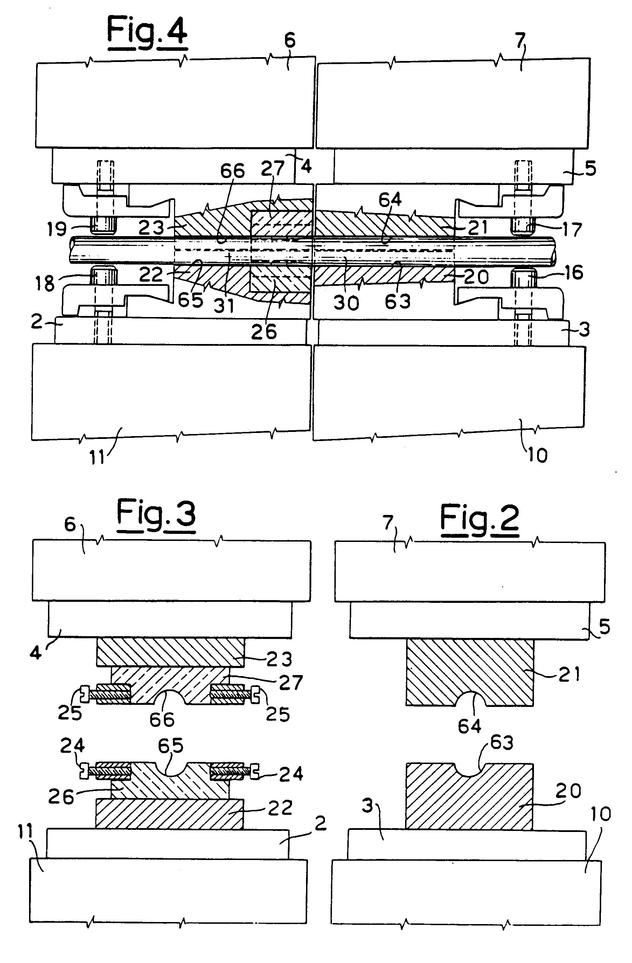

Fig. 2 shows a first pair of clamps in a sectional view taken along the line II-II of Fig 1;
Fig. 3 shows a second pair of clamps in a sectional view taken along the line III-III of Fig 1;
Fig. 4 is a view similar to that of Fig. 1, limited to the welding area, with the two pairs of clamps represented in a cross-sectional view in the operating position;

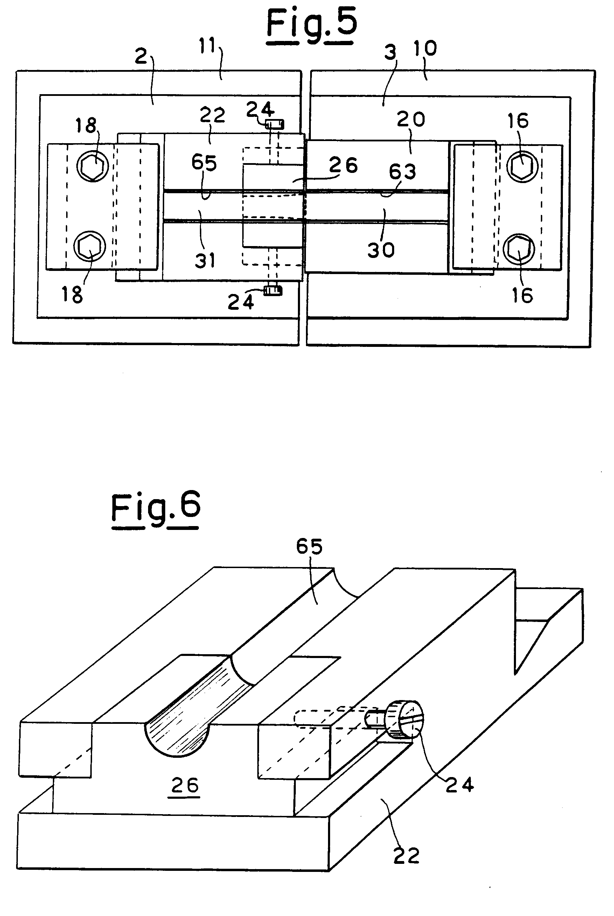

Fig. 5 is a top plan view of the same welding area;
Fig. 6 shows a perspective view of the enlarged detail of one of the clamps provided with a ceramic insert;
Fig.s from 7 to 10 show successive steps of the process for connecting the two pipes together.

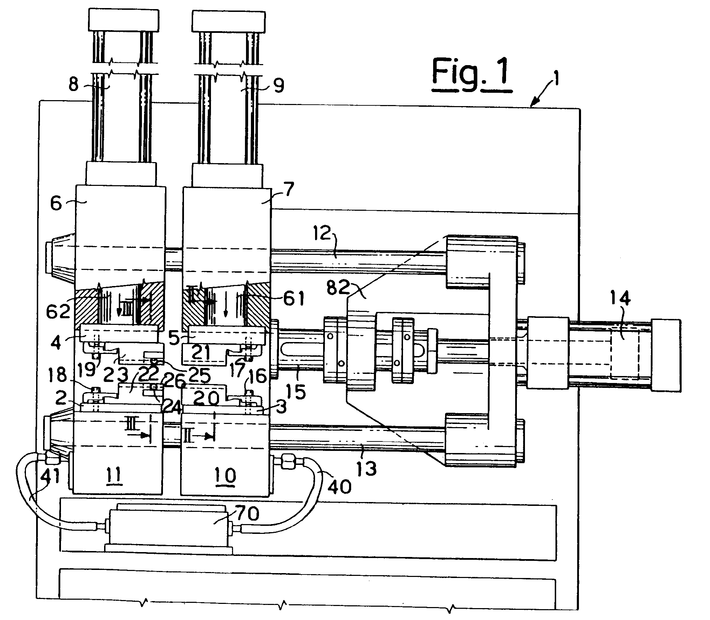

With reference to Fig. 1 the welding unit comprises a fixed frame 1 with which there is associated a first and a second pair of supports 3, 5 and 2, 4 for a first and a second pair of metal clamps 20, 21 and 22, 23, destined to support a copper pipe 30 and an aluminium pipe 31, respectively, inserted one inside the other. The first and the second pair of supports comprises respective lower supports 3, 2 and upper supports 5, 4. The upper supports 5, 4 are fastened to vertical stems 61, 62 which slide inside structural blocks 7, 6 under the action of cylinders 9, 8. The lower supports 2, 3 are in turn fastened to structural blocks 11, 10 which determine their vertical position with respect to the fixed frame 1. The blocks 6, 7, 10, 11 are traversed by bars 12, 13 that horizontally guide blocks 7, 10 under the action of a hydraulic cylinder 14 through a horizontal stem 15 which slides in a support 82 of the guide bars 12, 13. With the supports 3, 5 there are associated by means of screws 16, 17 the clamps 20, 21, each with a coupling face having a semicylindrical groove 63, 64 (Fig.s 2, 4 and 5). With the supports 2, 4 there are associated by means of screws 18, 19 the clamps 22, 23, each similarly having a semicylindrical groove 65, 66 (Fig.s 3 - 6), with which there are associated by means of screws 24, 25 similarly grooved ceramic inserts 26, 27. The lower supports 3, 2, and thus the clamps 20, 22, are connected electrically to a voltage source 70 suitable for producing an electric current across the two pairs of clamps 20, 21 and 22, 23, when clamping the pipes.

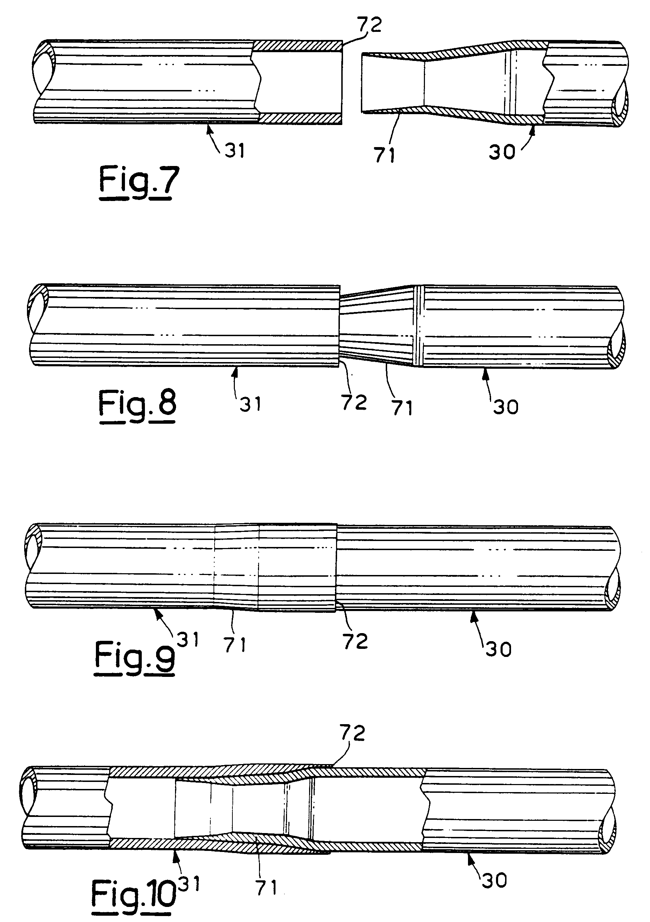

As illustrated in Fig. 1, in the position at rest the lower supports 3,2 and the upper supports 5, 4 are at a distance from one another. In this situation an aluminium pipe 31 is placed on the lower clamp 22 so that its extremity 72 is aligned with the right hand extremity of the clamp 22. Similarly a copper pipe 30 is placed on the clamp 20 so that its tapered extremity 71 (Fig. 7) protrudes for the part that is to be inserted into the aluminium pipe 31.

As illustrated in Fig.s 4, 5 and 7, 10 the two pipes 30, 31 are now clamped between the respective pairs of clamps 20, 21 and 22, 23 by the vertical translation of the upper clamps 21, 23, operated by the respective hydraulic means 61, 9 and 62, 8.

Subsequently the pair of blocks 10, 7, and thus the pair of clamps 20, 21, is translated horizontally to approach the pair of blocks 11, 6, and respectively of the clamps 22, 23, by sliding along the guide bars 12, 13 under the action of hydraulic means 14, 15. Due to this horizontal translation the tapered extremity 71 of the pipe 30 slides into the extremity 72 of the pipe 31 (Fig. 9) until the situation illustrated in Fig. 10 is reached.

At this point through the electrical source 70 and the electrical connections 40, 41 a difference of potential is applied across the clamps 20, 21 and the clamps 22, 23. There is thus produced and electric current which passes from pipe 30 to pipe 31 in the area within the ceramic inserts 26, 27 producing at this point a uniform resistance heating effect which causes the welding of the copper pipe 30 with the aluminium pipe 31, as shown in Fig. 10.

## Claims

1. Welding unit for a first and a second metal pipe inserted one inside the other, comprising a first and a second pair of electrically supplied clamps (20, 21; 22, 23) for supporting and clamping, respectively, said first (30) and second pipe (31) to be welded, characterized in that said clamps of the second pair (22, 23) comprise respective ceramic inserts (26, 27) in contact with said second pipe (31) in the area of insertion and welding of the first pipe (30).

2. Unit according to claim 1, characterized in that it comprises a voltage source (70) suitable for applying across said pairs of clamps (20, 21; 22, 23) a difference of potential such as to produce an electric current through said first and second metal pipes.

3. Unit according to claim 1, characterized in that said first and second pair of clamps (20, 21; 22, 23) comprise lower supports (3, 2) and upper supports (5, 4), said lower supports (3, 2) being one fixed and the other translatable horizontally in order to approach it under the action of hydraulic control means (14, 15), said upper supports (5, 4) being translatable vertically by means of hydraulic control means (9, 8) and one of said upper supports (5) being also translatable horizontally with respect to the other upper support (4) under the action of said hydraulic control means (14, 15).

## Patentansprüche

1. Schweißanordnung für ein erstes und ein zweites Metallrohr, welche ineinander einführbar sind, welche ein erstes und ein zweites Paar von elektrisch versorgten Halteeinrichtungen (20, 21; 22, 23) zum Halten und Einklemmen jeweils des ersten (30) und des zweiten, zu schweißenden Rohrs (31) aufweist, **dadurch gekennzeichnet**, daß die Halteeinrichtungen des zweiten Paars (22, 23) jeweils Keramikeinsätze (26, 27) aufweisen, welche in Kontakt mit dem zweiten Rohr (31) im Einführungs- und Schweißbereich des ersten Rohrs (30) sind.

2. Anordnung nach Anspruch 1, **dadurch gekennzeichnet**, daß sie eine Spannungsquelle (70) aufweist, welche in geeigneter Weise an die Paare von Halteeinrichtungen (20, 21; 22, 23) eine Potentialdifferenz derart anlegt, daß ein elektrischer Strom durch die ersten und zweiten Metallrohre erzeugt wird.

3. Anordnung nach Anspruch 1, **dadurch gekennzeichnet,** daß das erste und das zweite Paar von Halteeinrichtungen (20, 21; 22, 23) untere Auflager (3, 2) und obere Auflager (5, 4) aufweisen, von den unteren Auflager (3, 2) eines fest und das andere in horizontaler Richtung translatorisch bewegbar ist, um dieses unter der Wirkung einer hydraulischen Schalteinrichtung (14, 15) in annähernder Richtung zu verfahren, die oberen Auflager (5, 4) in vertikaler Richtung mit Hilfe einer hydraulischen Steuereinrichtung (9, 8) translatorisch bewegbar sind, und eines der oberen Auflager (5) ebenfalls horizontal bezüglich des anderen oberen Auflagers (4) unter der Wirkung der hydraulischen Steuereinrichtung (14, 15) translatorisch bewegbar ist.

## Revendications

1. Unité de soudage pour un premier et un deuxième tubes métalliques emboîtés l'un à l'intérieur de l'autre, qui comprennent une première et une deuxième paires de pinces (20, 21 ; 22, 23) alimentées électriquement destinées à supporter et serrer respectivement lesdits premier (30) et deuxième (31) tubes à souder, caractérisée en ce que lesdites pinces de la deuxième paire (22, 23) comprennent des inserts céramiques (26, 27) respectifs en contact avec ledit deuxième tube (31) dans la zone d'emboîtement et de soudage du premier tube (30).

2. Unité selon la revendication 1, caractérisée en ce qu'elle comprend une source de tension (70) appropriée pour appliquer aux bornes desdites paires de pinces (20, 21 ; 22, 23) une différence de potentiel appropriée pour faire passer un courant électrique à travers lesdits premier et deuxième tubes métalliques.

3. Unité selon la revendication 1, caractérisée en ce que lesdites première et deuxième paires de pinces (20, 21 ; 22, 23) comprennent des supports inférieurs (3, 2) et des supports supérieurs (5, 4), lesdits supports inférieurs (3, 2) étant, l'un fixe et l'autre mobile en translation horizontale pour pouvoir se rapprocher du premier sous l'action de moyens de commande hydrauliques (14, 15), lesdits supports supérieurs (5, 4) pouvant être déplacés en translation verticalement à l'aide de moyens de commande hydrauliques (9, 8) et l'un desdits supports supérieurs (5) pouvant aussi être déplacé en translation horizontale par rapport à l'autre support supérieur (4) sous l'action desdits moyens de commande hydrauliques (14, 15).
